# EUROPEAN PATENT APPLICATION

(11) **EP 0 644 244 A1**
(43) Date of publication of application: **22.03.1995**
(21) Application number: 94114075.8
(22) Date of filing: 08.09.1994
(51) Int. Cl.: C09D 5/44

(54) **Electrodeposition coating composition comprising zinc compounds for improved throw power**

(30) Priority: 17.09.1993 US 123399
(71) Applicant: BASF CORPORATION, Southfield, Michigan 48086-5009 (US)
(72) Inventor: Clark, Peter D., Hartland, Michigan 48353 (US); Montagne, Mark R., Southfield, Michigan 48034 (US)
(74) Representative: Münch, Volker, Dr.

(57) **Abstract**

An electrodeposition coating composition is described comprising an aqueous dispersion of a water-dispersible, electrically-depositable, at least partially neutralized cationic resin, and an acid salt of zinc.

## Description

### Field of the Invention

This invention relates to electrodeposition coating compositions, and in particular to such compositions including an acid salt of zinc.

### Background of the Invention

Electrodeposition coating, or electrocoating, is widely used in the art for the application of polymer coatings to metal substrates. Electrodeposition baths usually comprise a principal film-forming resin, such as an acrylic or epoxy resin, with ionic groups that can be salted so that the resin can be dispersed or dissolved in an aqueous bath. Pigments (dispersed in resin pastes), dyes, flow control agents, and other additives are often included in the electrocoat bath.

For automotive or industrial applications where hard electrocoat films are desired, the bath also includes a blocked crosslinking agent that unblocks under appropriate conditions (e.g., with the application of heat) to react with functional groups on the principal resin and thus cure the coating.

One of the advantages of electrodeposition coating compositions and processes is that the coating composition can be applied to a variety of metallic substrates regardless of shape or configuration. This is especially advantageous when the coating is applied as an anticorrosive coating onto a substrate having a number of irregular surfaces, such as a motor vehicle body. In order to maximize an electrodeposition coating's anticorrosion effectiveness, it is important that the coating form a contiguous layer over all portions of the metallic substrate.

A criterion for measuring the effectiveness of an electrodeposition coating for covering all portions of the substrate is throw power. Throw power measures the effectiveness of an electrodeposition coating at covering recessed or interior areas of a metal substrate. Good throw power is important in order to maximize anticorrosion effectiveness of an electrodeposition coating.

Electrodeposition coatings must often satisfy a number of other criteria as well. A high degree of smoothness is often desirable. For example, when the electrodeposition coating serves as a primer for a high-gloss topcoat, the primer layer must be very smooth in order for the topcoat to have a satisfactory appearance. It is also advantageous to exhibit stability over a range of pH.

It is therefore desirable to provide an electrodeposition coating composition that provides good throw power without compromising overall corrosion protection and smoothness.

### Summary of the Invention

According to the present invention, there is provided an electrodeposition coating composition comprising:
(a) an aqueous dispersion of a water-dispersible, electrically-depositable, at least partially neutralized cationic resin, and
(b) an acid salt of zinc
   and optionally
(c) a pigment paste.

When used in an electrodeposition process, the coating composition of the invention demonstrates a 10 to 20% improvement in throw power. The coating composition provides a smooth, contiguous coating over a variety of portions of the metal substrate, including recessed areas. The coating composition is thus highly effective as an anticorrosive primer coating for metal substrates, particularly for motor vehicle bodies.

### Description of the Preferred Embodiments

The present invention is directed to a coating composition including an aqueous dispersion of a water-dispersible, electrically-depositable, at least partially neutralized cationic resin, and an acid salt of zinc. The zinc salt is added to the electrically-depositable cationic resin to improve the throw power of the cathodic composition. The zinc salt is selected from the group consisting of zinc acetate, zinc lactate and salts derived from zinc oxide and acid. The preferred zinc salt is zinc acetate. The zinc salts are useful in the bath at levels of 0.005% to 0.70%, and preferably 0.20 to 0.40%, as a weight percentage of the principal resin nonvolatiles in the electrocoat bath.

In one method the zinc salt is added to the electrocoating bath described herein below, by forming a zinc salt solution of approximately 10% concentration in deionized water. The zinc salt solution is then added directly to the electrocoating bath to bring the zinc salt concentration of the bath to between 7 and 1050 ppm. Preferably the zink salt is present in an amount between 300 and 700 ppm. In an alternative method the zinc salt solution is added to the solution emulsion containing a cationic resin, coalescing agent or plasticizer, crosslinker and water. The zinc salt is added in an amount to bring the zinc salt concentration in the emulsion to between 0.0019% and 0.27% based on total emulsion weight. Preferably the zink salt is present in an amount between 0.01 and 0.20% by weight based on total emulsion weight. When zinc oxide is used, it is first added to the pigment paste and then reacts with acid present in the pigment paste or solution emulsion.

The present invention is useful in cathodic electrodeposition coating compositions. Water-dispersible resins usable in the electrodeposition coating process may be classified, depending upon their dispersed state, into the solution type, the dispersion type, the emulsion type, and the suspension type. These types of resins are collectively referred to as "water-dispersible resins" herein. A wide variety of such resins are known and may be used in this invention.

A variety of such resins are known including acrylic, polyester, polyether, phenolic, epoxy, polyurethane, polyamide, polybutadiene, and oil based resins. Typical examples thereof are acrylic copolymers containing acrylic or methacrylic acid, maleinized natural and synthetic drying oils, maleinized polybutadiene, half esters and half amides of maleinized oils and polymers.

Water-dispersible resins used in the cathodic electrodeposition coating process have a cationic functional group such as primary, secondary or tertiary amine moiety as a positively chargeable hydrophilic group. A variety of such resins are known including epoxy, polyether, polyester, polyurethane, polyamide, polybutadiene, phenolic and acrylic resins.

Cationic resins have been described in great number in the literature. They typically contain a number of basic groups, such as primary, secondary or tertiary amino groups, so as to provide dispersibility with water. If these resins contain primary and/or secondary amine groups, then they may or may not also contain hydroxyl groups and preferably they do. If only tertiary amino groups are present in the cationic resin, then the resin must contain hydroxyl or other functional groups in order to enable cross-linking. The amino equivalent weight of the cationic resin can range from 150 to 3000, and preferably 500 to 2000. The hydroxyl equivalent weight of the resins, if they have OH groups, is generally between 150 and 1000, and preferably 200 to 500. In addition, the resins may contain C=C double bonds, the C=C equivalent weight preferably being 500 to 1500.

The molecular weight (mean weight) of a typical cationic resin is usually in the range from 300 to 50,000, and preferably 5000 to 20,000.

Examples of cationic resins are described in the Journal of Coatings Technology, Vol. 54, No. 686, (1982), p. 33-41 ("Polymer Compositions for Cationic Electrodepositable Coatings"), the disclosure of which is incorporated by reference. Polymers of alpha, beta-olefinically unsaturated monomers that contain hydroxyl and/or amino groups may be mentioned here. The hydroxyl or amino groups may be introduced using appropriate monomers in the copolymerization, for example by means of hydroxyl or amino esters of alpha, beta-olefinically unsaturated carboxylic acids, such as hydroxyalkyl (meth)-acrylates or aminoalkyl (meth)acrylates, or by polymer analogous reaction with diamines or polyamides, for example with N,N-dimethylaminopropylamine, with formation of amide, amino or urethane groups. The polyaminopolyamides, which can be obtained from dimerized fatty acids and polyamines, are a further group. Aminopolyether polyols, which can be prepared by reaction of primary or secondary amines with a polyglycidyl ether, are particularly suited for this. Sufficient epoxide groups to convert all amino groups into tertiary amino groups are advantageously present here. The preferred polyglycidyl ethers are polyglycidyl ethers of bisphenol A and similar polyphenols. They can be prepared, for example by etherifying a polyphenol using an epihalohydrin, such as epichlorohydrin, in the presence of alkali.

The polyglycidyl ethers of the polyphenols may be reacted as such with the amines, but it is frequently advantageous to react some of the reactive epoxide groups with a modified material in order to improve the film properties. The reaction of the epoxide groups with a polyol or a polycarboxylic acid is particularly preferred.

Useful polyols can include polyether polyols, polyester polyols, or urethane polyols. Polyether polyols can be prepared by addition polymerization of alkylene oxides (for example ethylene oxide, propylene oxide, tetrahydrofuran) with low-molecular-weight polyols having 2 to 8 carbon atoms and a molecular weight of about 50 to 300 (for example ethylene glycol, diethylene glycol, propylene glycol, dipropylene glycols, glycerol, trimethylolpropane, 1,2,6-hexanetriol, pentaerythrite). If ethylene oxide is used alone or in combination with other alkylene oxides as alkylene oxide components, the water-solubility of the resin is improved.

Polyester polyols can be prepared by reaction of the above mentioned low-molecular weight polyols or epoxy compounds, for example fatty acid glycidyl esters, with polycarboxylic acid (for example adipic acid, succinic acid, maleic acid, phthalic acid, or terephthalic acid), or derivatives thereof.

Polyester polyols can be prepared by ring-opening polymerization of a cyclic ester, such as caprolactone or butyrolactone.

Urethane-modified polyols can be obtained by reaction of an excess of the above mentioned polyether polyols or polyester polyols with an organic polyisocyanate.

The above-mentioned polycarboxylic acids are obtained by reaction of the polyols described above with an excess of polycarboxylic acids or, preferably, the anhydrides thereof. They can likewise be obtained by esterification of polycarboxylic acids, or anhydrides thereof, using low-molecular weight polyols, such as ethylene glycol, propylene glycol, etc. Low-molecular weight polyether polyamines or polyamines, such as, for example, hexamethylenediamine, may also be employed in place of the low-molecular weight polyols.

The modification of the aminopolyether polyols using polyols or polycarboxylic acids is preferably carried out before the reaction of the polyglycidyl ethers with the primary or secondary amines. However, it is also possible to select the ratio of the polyglycidyl ether used as starting material to the amines in such a fashion that an excess of epoxy groups is present. The epoxy groups may then be reacted with the polycarboxylic acids or polyols. It is furthermore possible to further modify the final product, which no longer contains epoxide groups, by reaction of the hydroxyl groups with glycidyl ethers.

According to the curing mechanism of particular resins, they may be classified into three classes. The first one is those capable of self-crosslinking through a radical or oxidative polymerization reaction. The second class of resins requires a crosslinking agent such as blocked polyisocyanates. The third one utilizes both the self-crosslinking reaction and the crosslinking agent in combination.

According to the type of energy source required for initiating the crosslinking reaction, the water-dispersible, chargeable resins may also be classified into the ambient temperature curing or more preferably heat-curing.

The water-dispersible resins useful as principal resins in the present invention are typically hydrophilic such that they are not soluble or dispersible in water when they are in the form of a free base, but become soluble or dispersible to make a stable aqueous solution or dispersion when a sufficient amount (e.g., at least 20%, and more typically 50%) of the base function is neutralized. If the water-dispersible resins are too hydrophilic, they fail to form a coating film having satisfactory water- or corrosion resistance and/or the application of electrodeposition coating processes becomes difficult.

In order to enhance various film properties, the water-dispersible resins are often used in the form of an emulsion in which the water-dispersible resin constitutes a continuous phase, and an optional water-insoluble resin free from chargeable hydrophilic groups (e.g., an epoxy acrylate resin) constitutes a dispersed phase.

When the resin can be crosslinked with a crosslinking agent included in the coating composition for the electrocoat primer layer, any of a number of crosslinking agents or curing agents may be used. Commonly-used crosslinking agents include blocked polyisocyanates including isocyanurates of polyisocyanates (e.g., hexamethylene diisocyanate) and transesterification crosslinking agents.

In a preferred embodiment of the invention, the crosslinking agent is an aromatic polyisocyanate, including isocyanurates of aromatic polyisocyanates. Useful aromatic polyisocyanates include toluene diisocyanate (TDI), methylene diphenyl diisocyanate (MDI), tetramethylxylene diisocyanate, and the like. In another preferred embodiment, an isocyanurate of an aliphatic polyisocyanate such as hexamethylene diisocyanate is used. These isocyanates are pre-reacted with a blocking agent such an oxime, an alcohol, or an amine, which blocks the isocyanate crosslinking functionality. Upon heating, the blocking agents separate and crosslinking occurs.

The electrodepositable coating compositions of the present invention are dispersed in aqueous medium. The term "dispersion" as used within the context of the present invention is believed to be a two-phase translucent or opaque aqueous resinous system in which the resin is in the dispersed phase and water the continuous phase. The average particle size diameter of the resinous phase is about 0.1 to 10 microns, preferably less than 5 microns. The concentration of the resinous products in the aqueous medium is, in general, not critical, but ordinarily the major portion of the aqueous dispersion is water. The aqueous dispersion usually contains from about 3 to 50 percent preferably 5 to 40 percent by weight resin solids. Aqueous resin concentrates which are to be further diluted with water, generally range from 10 to 30 percent by total weight solids.

The above components are uniformly dispersed in an aqueous medium containing a base in case of the anodic electrodeposition or an acid in case of the cathodic electrodeposition in an amount sufficient to neutralize enough of the ionic groups to impart water-dispersibility to the resin. Examples of bases include ammonia, diethanolamine, triethanolamine, methylethanolamine, diethylamine, morpholine, and potassium hydroxide. Examples of acids include phosphoric acid, acetic acid, propionic acid and lactic acid.
Besides water, the aqueous medium may also contain a coalescing solvent. Useful coalescing solvents include hydrocarbons, alcohols, esters, ethers and ketones. The preferred coalescing solvents include alcohols, polyols and ketones. Specific coalescing solvents include monobutyl and monohexyl ethers of ethylene glycol, and phenyl ether of propylene, glycolethylcellosolve, propylcellosolve, butylcellosolve, ethyleneglycol dimethyl ether, or diacetone alcohol. A small amount of a water-immiscible organic solvent such as xylene, toluene, methyl isobutyl ketone or 2-ethylhexanol may be added to the mixture of water and the water-miscible organic solvent. The amount of coalescing solvent is not unduly critical and is generally between about 0 to 15 percent by weight, preferably about 0.5 to 5 percent by weight based on total weight of the resin solids.

The electrodeposition coating composition used in this invention may further contain conventional pigments such as titanium dioxide, ferric oxide, carbon black, aluminum silicate, precipitated barium sulfate, aluminum phosphomolybdate, strontium chromate, basic lead silicate or lead chromate. The pigment-to-resin weight ratio can be important and should be preferably less than 50:100, more preferably less than 40:100, and usually about 20 to 40:100. Higher pigment-to-resin solids weight ratios have also been found to adversely affect coalescence and flow.

The electrodeposition coating compositions used in the invention can contain optional ingredients such as wetting agents, surfactants, UV absorbers, HALS compounds, antioxidants, defoamers and so forth. Examples of surfactants and wetting agents include alkyl imidazolines such as those available from Ciba-Geigy Industrial Chemicals as Amine C®, acetylenic alcohols available from Air Products and Chemicals as Surfynol® 104. These optional ingredients, when present, constitute from about 0 to 20 percent by weight of resin solids. Plasticizers are optional ingredients because they promote flow. Examples are high boiling water immiscible materials such as ethylene or propylene oxide adducts of nonyl phenols or bisphenol A. Plasticizers can be used and if so are usually used at levels of about 0 to 15 percent by weight resin solids.

Curing catalysts such as tin catalysts are usually present in the coating composition. Examples are dibutyltin dilaurate and dibutyltin oxide. When used, they are typically present in amounts of about 0.05 to 2 percent by weight tin based on weight of total resin solids.

In general, sufficient water is added so that the dispersion has a solids content of more than 20, preferably more than 30% by weight.

The electrodeposition coating composition used in this invention may be applied on a conductive substrate by the electrodeposition coating process at a nonvolatile content of 10 to 25% by weight to a dry film thickness of 10 to 35 µm. After application, the coating may be cured at ambient or an elevated temperature, depending upon the nature of particular base resins.

The electrodeposition of the coating preparations according to the invention may be carried out by any of a number of processes known to those skilled in the art. The deposition may be carried out on all electrically conducting substrates, for example metal, such as steel, copper, aluminum and the like.

According to the invention, a pigmented resin coating and optionally a clearcoat layer is applied over the electrocoat primer layer. In automotive applications, the pigmented resin layer is often called a basecoat or pigmented basecoat. The resin in the pigmented resin layer can be of a number of resins known in the art. For example, the resin can be an acrylic, a polyurethane, or a polyester. Typical pigmented resin coating formulations are described in U.S. Patents 4,791,168, 4,414,357, and 4,546,046. The pigmented resin can be cured by any of the known mechanisms and curing agents, such as a melamine polyol reaction (e.g., melamine cure of a hydroxy-functional acrylic resin).

The invention is further described in the following examples.

### Examples - Electrocoat Coating Compositions

### Example 1

### Preparation of Blocked Isocyanate Crosslinker A

To a 5 liter round bottom flask equipped with a condenser, nitrogen flow, and temperature probe, the following materials were added:
1146.2 g Methylene diisocyanate
2.0 g dibutyl tin diluarate
The mixture was heated to 35°C at which time the following was added over two hours.
962.6 g diethylene glycol butyl ether
The temperature increased to and was maintained at 57 - 60°C until one hour following the end of the addition. The mixture was diluted with the following:
773.7 g methyl isobutyl ketone
2.4 g dibutyl tin diluarate
The following was added over 30 minutes:
86.7 g trimethylol propane
The temperature was allowed to exotherm to and was maintained at 77°C during this addition. The temperature was maintained at 87°C for 4 additional hours. The following was added after which the temperature was maintained one hour at 85°C.
96.3 g n-butanol
30.0 g methyl isobutyl ketone

### Example 2

### Preparation of Crosslinker B

To a 3 liter round bottom flask equipped with a condenser, nitrogen flow, and temperature probe, the following materials were added:
967.4 g isocyanurate of HMDI (Desmodur N3300®)
387.4 g methyl isobutyl ketone
The following was added from an addition tank at a rate such that the temperature of the mixture was maintained at 60°C:
616.0 g dibutyl amine
The temperature was maintained for 30 minutes after which the following addition was made:
0.4 g dibutyl tin dilaurate
28.6 g n-butanol
The mixture was heated to 75°C for 1 hour at which time no free isocyanate was observed by infra-red spectroscopy.

### Example 3

### Preparation of Grind Resin

To a 12 liter round bottom flask equipped with a condenser, Nitrogen flow, and temperature probe, the following materials were added:
2343.6 g Diglycidyl ether of Bisphenol A (DGEBA)
408.2 g Dodecylphenol
710.6 g bisphenol A
178.8 g xylene
The components were heated with mixing to 120°C at which time the following was added:
3.4 g triphenyl phosphine
The mixture exothermed to a peak temperature of 176°C after which the temperature was maintained at 150°C for one hour. At this time the following was added:
2103.6 g diepoxide of polypropylene oxide (EEW=378 g/eq.)
876.8 g butyl cellosolve
The mixture was cooled to 78°C at which time the following was added:
240.0 g amino ethoxy ethanol
The mixture exothermed to 97°C over 30 minutes at which time the following was added:
190.6 g dimethylaminopropylamine
The mixture exothermed to 120°C over 15 minutes after which the temperature was held at 110°C for four hours. After cooling the mixture to 100°C the following was added.
1012.4 g butyl cellosolve
Once homogeneous, the following was added over 25 minutes:
187.3 g glacial acetic acid
1164.8 g deionized water
After one hour mixing, the material was transferred to a 5 gallon plastic pail. The following was added to the empty flask and heated to 60°C with mixing to recover residual material.
499.9 g butyl cellosolve
78.4 g deionized water
Once adequately solved in the wash solution, the solution was added with mixing to the plastic pail.

### Example 4

### Preparation of a Gray Pigment Paste

In a stainless steel 1/2 gallon vessel, the following were added and mixed thoroughly on order listed with a high speed cowles blade for 15 minutes:
307.1 g grind resin from example 4
4.3 g coalescing aid
332.2 g deionized water
After a homogeneous state was obtained, the following components were added in the order listed:
8.4 g carbon black
83.7 g deionized water
43.3 g metal oxide white pigment
55.7 g clay extender
527.6 g metal oxide white pigment
37.7 g dibutyl tin oxide
28.0 g deionized water
The material was mixed for one hour followed by milling on a small media mill to a fineness of grind of 10 microns

### Example 5

### Preparation of Principal Emulsion

To a 12 liter round bottom flask equipped with a condenser, Nitrogen flow, and temperature probe, the following materials were added:
1095.1 g DGEBA
249.0 g bisphenol A
238.9 g dodecylphenol
79.4 g xylene
The mixture was heated with stirring to 120°C and vacuum distilled by vacuum into a Dean Stark trap to remove any moisture. After heating to 125°C, the following addition was made:
3.1 g benzyl dimethyl amine
After exotherming to 152°C, the mixture cooled to 140°C at which time the following was added:
1.7 g benzyl dimethyl amine
The mixture was maintained at 130°C and titrated for epoxy content at 30 minute intervals to an endpoint of 870 g N.V> resin/ eq. epoxide. At this point the following was added:
34.7 g butyl cellosolve
182.3 g sec-butanol
124.3 g diethanol amine
The mixture was cooled to 90°C over a one hour period at which time the following was added:
177.7 g ethoxylated phenolic plasticizer
128.2 g sec-butanol
48.7 g propylene glycol phenyl ether
The mixture was further cooled to 65°C over 35 minutes at which time the following was added:
34.8 g dimethyl amino propyl amine
The mixture was maintained 30 minutes at 65°C then heated to 90°C and maintained for one hour. The mixture was cooled to 68°C and blended with the following until homogeneous:
740.3 g crosslinker A from example 1
647.7 g crosslinker B from example 2
8.9 g anti-crater additive
The following was added in order and vigorously mixed:
105.0 g lactic acid (88%)
2034.0 g deionized water
Once homogeneous, the mixture was reduced with the addition of the following over a 90 minute period with continued agitation:
3060.2 g deionized water
The above emulsion was split into portions and heated to 50°C and vacuum distilled to remove low boiling solvents. Distillation was continued until a concentration of sec-butanol < 0.5% was achieved. All condensate removed in the process were replenished with deionized water.

### Example 6

### Plasticizing Resin Emulsion

In a reaction vessel 126.7 parts Epon 829 was combined with 36.9 parts Bisphenol A and heated to 143°C under nitrogen blanket. The material was allowed to exotherm to 190°C after which the temperature was maintained at 175°C for one hour. After cooling below 160°C, 45.8 parts butylcellosolve were added yielding intermediate A.

In a second vessel 622.6 parts Jeffamine D2000 were heated to 90°C under nitrogen atomosphere. Intermediate A, 213.4 parts, was added with 36.8 parts butylcellosolve. The mixture was heated to 115°C for 2-3 hours to a stalled resin viscosity. At this point 24.1 parts Bisphenol A were added and mixed for 15 minutes, after which 6.3 parts p-firmaldehyde were added. This mixture was held 3-6 hours to a stalled resin viscosity.

This resin was cooled to 110°C and blended with 784 parts crosslinker comprised of 290.0 parts 2,4-toluene diisocyanate 80:20 (TD-80),198.6 parts monobutylether of ethylene glycol (butlcellosolve), 75 parts trimethyolpropane (TMP), and reduced with 219.5 parts 2-(2-butoxyethoxy)ethanol. Synthesis of this crosslinker follows general procedures discussed in Example 2. After mixing until homogeneous the blend is dropped to mixture "C". Mixture "C" was comprised of 882 parts deionized water, 33 parts lactic acid, 1.4 parts Surfynol 104 and 1.4 parts butylcellosolve. The mixture was dispersed with mixing and diluted with 1226 parts deionized water.

### Example 7

### Preparation of Final Blended Emulsion

A final blended emulsion was prepared containing a principal resin emulsion and a plasticizing emulsion in a 90:10 ratio of principal resin to plasticizing resin.

### Example 8

### Preparation for Electrodeposition Bath

An electrocoating bath was prepared as follows. A final blended emulsion containing a principal resin emulsion (ex.6) and a plasticizing emulsion (ex.7) was combined with a pigment paste (ex.6). The resultant bath has a non-volatile solids content of between 5 to 35 %. The following table sets forth the composition of baths prepared with and without zinc acetate.

**Table 1**

| Electrocoat Bath Composition (All weights are in grams) | | | | |
|---|---|---|---|---|
| Sample | Emulsion¹ | Pigment Paste² | Water | Zinc |
| 1 | 2130.4 | 416.8 | 2052.8 | --- |
| 2 | 1962.62 | 378.74 | 2258.64 | --- |
| 3 | 1979.49 | 373.12 | 2247.39 | 23 grams |

| | | | | |
|---|---|---|---|---|
| 1 Emulsion from Example 7. | | | | |
| 2 Pigment paste from Example 4. | | | | |

### Samples 1A-3A

Samples 1A-3A were prepared corresponding to Samples 1-3 respectively and then aged.

### Example 9

### Throw power Testing

Ford throw power boxes were constructed from phosphated cold rolled steel and coated at voltages ranging from 275V to 350 volts, to a film build ranging from 0.66 to 1.25 mils from electrodeposition baths 1-3 and 1A-3A. The tests were conducted at 1.6 Amps and over a time of 2.2 minutes. The total distance of painted substrate was measured for each bath. As demonstrated, significant improvements in throwing potential are achieved through incorporation of the zinc acid salt.

**Table 2**

| Throw power Results for Electrocoat Baths 1-3 and 1A-3A | | | | | | |
|---|---|---|---|---|---|---|
| **Sample** | **Volts** | **Temp (°F)** | **Coulombs** | **Film Build (mils)** | | **Throw Height (mm)** |
| | | | | A¹ | C² | |
| 1 | 275 | 90.0 | 52 | 0.90 | 0.85 | 170 |
| | 300 | 90.2 | 56 | 0.97 | 0.95 | 185 |
| | 325 | 90.0 | 58 | 1.06 | 1.02 | 187 |
| | 350 | 90.0 | 61 | 1.13 | 1.08 | 199 |
| 1A | 275 | 90.0 | 48 | 0.72 | 0.68 | 161 |
| | 300 | 90.0 | 50 | 0.79 | 1.77 | 164 |
| | 325 | 90.2 | 53 | 0.89 | 0.84 | 177 |
| 2 | 275 | 90.0 | 52 | 0.89 | 0.84 | 166 |
| | 300 | 90.0 | 56 | 0.95 | 0.92 | 178 |
| | 325 | 90.0 | 59 | 1.05 | 1.03 | 179 |
| | 350 | 90.0 | 63 | 1.14 | 1.10 | 190 |
| 2A | 275 | 90.0 | 43 | 0.79 | 0.72 | 175 |
| | 300 | 90.0 | 45 | 0.81 | 0.75 | 182 |
| | 325 | 90.0 | 48 | 0.94 | 0.85 | 189 |
| 3 | 275 | 90.0 | 57 | 0.92 | 0.89 | 204 |
| | 300 | 90.0 | 59 | 0.98 | 0.97 | 214 |
| | 325 | 90.2 | 63 | 1.09 | 1.07 | 220 |
| | 350 | 90.2 | 69 | 1.25 | 1.20 | 222 |
| 3A | 275 | 90.0 | 52 | 0.77 | 0.76 | 227 |
| | 300 | 90.2 | 54 | 0.86 | 0.83 | 237 |
| | 325 | 90.0 | 57 | 0.96 | 0.94 | 242 |

| | | | | | | |
|---|---|---|---|---|---|---|
| 1 Film Build on anode side. | | | | | | |
| 2 Film build on cathode side. | | | | | | |

The invention has been described in detail with reference to preferred embodiments thereof. It should be understood, however, that variations and modifications can be made within the spirit and scope of the invention.

## Claims

1. An electrodeposition coating composition comprising:
(a) an aqueous dispersion of a water-dispersible, electrically-depositable, at least partially neutralized cationic resin, and
(b) an acid salt of zinc,
wherein the addition of the zinc salt improves the throw power of the coating composition.

2. The electrodeposition coating composition according to claim 1, wherein the acid salt of zinc is selected from the group consisting of zinc acetate, zinc lactate and salts derived from zinc oxide.

3. The electrodeposition coating composition according to claim 1, wherein the acid salt of zinc is present in an amount between 10 and 1050 ppm based on total weight of the electrocoating bath.

4. The electrodeposition coating composition according to claim 1, further comprising a blocked polyisocyanate crosslinker selected from the group consisting of isocyanurates of polyisocyanates.

5. The electrodeposition coating composition according to claim 3, wherein the crosslinking agent is selected from the group consisting of aromatic polyisocyanates and isocyanurates of aromatic polyisocyanates.

6. The electrodeposition coating composition according to claim 3, wherein the crosslinking agent is selected from the group consisting of toluene diisocyanate, methylene diphenyl diisocyanate, hexamethylene diisocyanate and tetramethylxylene diisocyanate.

7. An electrodeposition coating composition according to claim 1 comprising from 10 to 40 percent by weight, based on the solids weight of said resin (a).

8. An electrodeposition coating composition according to claim 1, further comprising a pigment paste.

9. An electrodeposition coating composition comprising:
(a) an aqueous dispersion of a water-dispersible, electrically-depositable, at least partially neutralized cationic resin,
(b) an acid salt of zinc,
wherein the addition of the zinc salt improves the throw power of the coating composition and
(c) a blocked polyisocyanate crosslinker selected from the group consisting of blocked polyisocyanate crosslinker selected from the group consisting of isocyanurates of polyisocyanates.

10. An electrodeposition coating composition according to claim 9, further comprising a pigment paste.

11. An electrodeposition coating composition according to claim 9, comprising from 10 to 40 percent by weight, based on the solids weight of said resin (a).

12. An electrodeposition coating composition according to claim 9, wherein the acid salt of zinc is selected from the group consisting of zinc acetate, zinc lactate and salts derived from zinc oxide.

13. An electrodeposition coating composition according to claim 9, wherein the acid salt of zinc is present in an amount between 10 and 1050 ppm, based on total electrocoating bath weight.

14. An electodeposition coating composition according to claim 9, wherein the crosslinking agent is selected from the group consisting of aromatic polyisocyanates and isocyanurates of aromatic polyisocyanates.
